(19) Europäisches Patentamt
European Patent Office
Office européen des brevets

(11) **EP 2 796 913 A2**

(12) **EUROPEAN PATENT APPLICATION**

(43) Date of publication:
**29.10.2014 Bulletin 2014/44**

(51) Int Cl.:
***G02B 13/00*** (2006.01)

(21) Application number: **13190066.4**

(22) Date of filing: **24.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.04.2013 TW 102207434 U**

(71) Applicant: **Ability Opto-Electronics Technology
Co., Ltd.
Taichung City 428 (TW)**

(72) Inventor: **Liao, Kuo-yu
437 Taichung City (TW)**

(74) Representative: **De Pablos Riba, Julio
Los Madrazo, 24
28014 Madrid (ES)**

(54) **An imaging lens assembly with five lenses**

(57) An imaging lens assembly comprises a fixing diaphragm (30) and an optical set including five lenses. An arranging order from an object side to an image side is: a first positive lens (10); a second positive lens (20); a third positive lens (40); a fourth negative lens (50); a fifth lens (60) having a convex surface with a corrugated contour and a concave surface with a corrugated contour, at least one surface of the first, second, and third lenses (10), (20), (40) is aspheric, and at least one surface of the fourth and fifth lenses (50),(60) is aspheric; and the fixing diaphragm (30) disposed between an object and the third lens (40) . By the concatenation between the lenses and the adapted curvature radius, thickness, interval, refractivity, and Abbe numbers, the assembly attains a big diaphragm with wide-angle, a shorter height, and a better optical aberration.

FIG.1

EP 2 796 913 A2

**Description**

**BACKGROUND OF THE INVENTION**

**1. Field of the Invention**

The present invention relates to an imaging lens assembly with five lenses, in particular to a lens structure attaining a less distortion and a high resolution by curvature, interval and optical parameter between each lens.

**2. Description of the Related Art**

The conventional lens structure adopts an image display lens assembly which is applied to smart phone, tablet PC, cell phone, notebook, and webcam. The electronic products are developed to become lighter, thinner, shorter, and smaller and provided with wide-angle lens. A video sensor of the image display lens assembly, such as Charge Coupled Device (CCD) or Complementary Metal Oxide Semiconductor (CMOS), is also developed for being more wide-angle, so the lens structure is ceaselessly developed to be provided with compactness for being more wide-angle.

Therefore, the present invention is disclosed in accordance with a lens structure with multi-lens for a demand of the development of the image display lens assembly, especially to an imaging lens assembly of a lens structure with at least five lenses.

**SUMMARY OF THE INVENTION**

In view of the conventional lens structure that has big volume and lack of efficiency, an imaging lens assembly with five lenses is disclosed.

It is an object of the present invention to provide an imaging lens assembly with five lenses, which comprises a fixing diaphragm and an optical set. The optical set includes a first lens, a second lens, a third lens, a fourth lens, and a fifth lens, an arranging order thereof from an object side to an image side is: the first lens with a positive refractive power defined near an optical axis and a concave surface directed toward the object side, at least one surface of the first lens is aspheric; the second lens with a positive refractive power defined near the optical axis and a concave surface directed toward the object side, at least one surface of the second lens is aspheric; the third lens having a lens with a positive refractive power defined near the optical axis and a convex surface directed toward the image side, at least one surface of the third lens is aspheric; the fourth lens with a negative refractive power defined near the optical axis, a concave surface directed toward the object side, and a convex surface directed toward the image side, at least one surface of the fourth lens is aspheric; the fifth lens having a convex surface with a corrugated contour directed toward the object side and disposed near the optical axis and a concave surface with a corrugated contour directed toward the image side and disposed near the optical axis, at least one surface of the fifth lens is aspheric; and the fixing diaphragm is disposed between an object and the third lens.

The imaging lens assembly satisfies the following conditional expression: FOV>80□. The FOV is defined as a maximum using visual angle of the lens.

The imaging lens assembly satisfies the following conditional expression: TL/Dg>1. The TL is defined as a distance from an intersection point of the object side of the first lens and the optical axis to an imaging surface side. The Dg is defined as a length diagonal of a maximum using visual angle of said lens assembly imaged on said imaging surface.

A shape of the aspheric surface satisfies a formula of:

$$z = \frac{ch^2}{1+[1-(k+1)c^2h^2]^{0.5}} + Ah^4 + Bh^6 + Ch^8 + Dh^{10} + Eh^{12} + Fh^{14} + Gh^{16}$$
$$+ Hh^{18} + Jh^{20} + ...$$

The z is defined as a position value about a location at a height of h along a direction of the optical axis referring to a surface top point. The k is defined as a conic constant. The c is defined as a reciprocal of a radius of a curvature. The A, B, C, D, E, F, G, etc. are defined as high-order aspheric surface coefficients.

The present invention is characterized in that a lens structure attains a big diaphragm with wide-angle, a less distortion, and a high resolution by curvature, interval, and optical parameter between each lens.

**BRIEF DESCRIPTION OF THE DRAWINGS**

Fig. **1**     is a schematic view showing an optical structure of a preferred embodiment of the present invention;
Fig. **2**     is a schematic view showing an astigmatic aberration of the preferred embodiment of the present invention;
Fig. **3**     is a schematic view showing a distorted aberration of the preferred embodiment of the present invention; and
Fig. **4**     is a schematic view showing a spherical aberration of the preferred embodiment of the present invention.

**DETAILED DESCRIPTION OF THE PREFERRED EMBODIMENTS**

Before describing in detail, it should note that the like elements are denoted by the similar reference numerals throughout disclosure.

The present invention provides an imaging lens structure, inparticular to a lens structure attaining a big diaphragm with wide-angle, a less distortion, and a high resolution by a curvature, an interval, and an optical parameter between each lens.

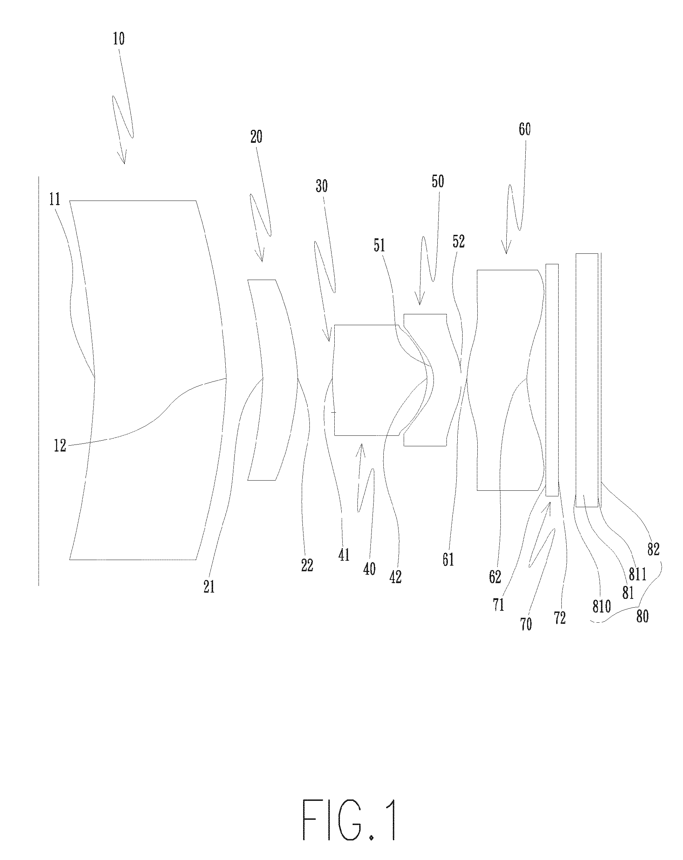

Referring to Fig. **1,** a schematic view of an optical structure of an imaging lens assembly with five lenses is shown. The structure of the imaging lens comprises a fixing diaphragm **30** and an optical set. The optical set includes a first lens **10,** a second lens **20,** a third lens **40,** a fourth lens **50,** and a fifth lens **60,** an arranging order thereof from an object side to an image side is: the first lens **10** with a positive refractive power defined near an optical axis and a concave surface directed toward the object side; the second lens **20** with a positive refractive power defined near the optical axis and a concave surface directed toward the object side; the third lens **40** with a positive refractive power defined near the optical axis and a convex surface directed toward the image side; the fourth lens **50** with a negative refractive power defined near the optical axis, a concave surface directed toward the object side, and a convex surface directed toward the image side; the fifth lens **60** having a convex surface with a corrugated contour directed toward the object side and disposed near an optical axis, and a concave surface with a corrugated contour directed toward the image side and disposed near the optical axis, at least one surface of the first lens **10,** the second lens **20,** and the third lens **40 is** aspheric, and the two surfaces of the fourth lens **50** and the fifth lens **60** are aspheric; the fixing diaphragm **30** is disposed between an object and the third lens **40;** a filter unit **70** filtering light with specific wave length, which is adopted by an infrared stopping filter unit for being used for a visible light image; and an image sensor **80** (an imaging surface side) used for receiving a digital signal transformed by an infrared invisible light image of the filter unit. The image sensor **80** includes a flat protection lens **81** and a video sensor **82.** The video sensor 82 is preferably adopted by Charge Coupled Device (CCD) or Complementary Metal Oxide Semiconductor (CMOS).

The imaging lens assembly satisfies the following conditional expression: of FOV>80□. The FOV is defined as a maximum using visual angle of the lens.

The imaging lens assembly satisfies the following conditional expression: TL/Dg>1. The TL is defined as a distance from an intersection of the object side of the first lens and the optical axis to the imaging surface side. The Dg is defined as a length diagonal of a maximum using visual angle of said lens assembly imaged on said imaging surface.

The first lens **10** includes a first surface **11** facing an object side and a second surface **12** facing the imaging surface side. The first surface **11** is defined as a concave surface disposed near the optical axis opposite to the object side. The second surface **12** is defined as a convex surface disposed near the optical axis opposite to the imaging surface side. The second lens **20** includes a third surface **21** facing the object side and a fourth surface **22** facing the imaging surface side. The third surface **21** is defined as a concave surface disposed near the optical axis opposite to the object side. The fourth surface **22** is defined as a convex surface disposed near the optical axis opposite to the imaging surface side. The third lens **40** includes a fifth surface **41** facing the object side and a sixth surface **42** facing the imaging surface side. The fifth surface **41** is defined as a convex surface disposed near the optical axis opposite to the object side. The sixth surface **42** is defined as a convex surface disposed near the optical axis opposite to the imaging surface side. The fourth lens **50** includes a seventh surface **51** facing the object side and a eighth surface **52** facing the imaging surface side. The seventh surface **51** is defined as a concave surface disposed near the optical axis opposite to the object side. The eighth surface **52** is defined as a convex surface disposed near the optical axis opposite to the imaging surface side. The fifth lens **60** includes a ninth surface **61** facing the object side and a tenth surface **62** facing the imaging surface side. The ninth surface **61** is defined as a convex surface disposed near the optical axis opposite to the object side. The tenth surface **62** is defined as a concave surface disposed near the optical axis opposite to the imaging surface side. At least one surface of the first lens **10,** the second lens **20,** and the third lens **40** is aspheric, and the two surfaces of the fourth lens **50** and the fifth lens **60** are aspheric, thereby correcting the spherical aberration and the image aberration for being provided with a characteristic of low tolerance sensitivity.

A shape of the aspheric surface of the imaging lens assembly satisfies a formula of:

$$z = \frac{ch^2}{1+[1-(k+1)c^2h^2]^{0.5}} + Ah^4 + Bh^6 + Ch^8 + Dh^{10} + Eh^{12} + Fh^{14} + Gh^{16}$$
$$+ Hh^{18} + Jh^{20} + ...$$

The z is defined as a position value about a location at a height of h along a direction of the optical axis referring to a surface top point. The k is defined as a conic constant. The c is defined as a radius of a curvature. The A, B, C, D, E, F, G, etc. are defined as high-order aspheric surface coefficients.

In an ultra-wide-angle micro-optical image capturing device of the present invention, the fixing diaphragm **30** is disposed between the object and the third lens **40** for getting an incident beam. The first lens **10**, the second lens **20**, and the third lens **40** are adopted by lenses with positive refractive power defined near the optical axis, and the fourth lens **50** is adopted by a lens with negative refractive power defined near the optical axis. The first lens **10** and the second lens **20** are defined convex to the object side for assembling the external incident beam with ultra-wide-angle so as to keep the beam on the second surface **12** of the first lens **10** and the fourth surface **22** of the second lens **20**, thereby presenting a function of the aspheric surface, correcting the aberration, reducing the tolerance sensitivity, and rendering the device have ultra-wide-angle with an image-capture angle over 80°. The fifth surface **41** defined on the third lens **40** as a convex surface disposed near the optical axis opposite to the object side is then expanded. The sixth surface **42** is a convex surface disposed near the optical axis opposite to the imaging surface side. The fourth lens **50** is dispersed via the seventh surface **51** that is defined convex to the imaging surface side, so that the beam is able to be spread on the tenth surface **62** of the fifth lens **60** with a larger dimension. That is to say, the incident beam is expanded by the fifth surface **41** for being spread on the tenth surface **62** with a larger dimension.

The aspheric surface not only corrects the spherical aberration and the image aberration but also reduces the full length of the lens optical system. The first lens **10**, the second lens **20**, the third lens **40**, the fourth lens **50**, and the fifth lens **60** are preferably adopted by plastic, which is conducive to eliminate the aberration and reduce the weight of the lens. The entire optical system consists of five plastic lenses and benefits a mass production. The system also provides with the low tolerance sensitivity for meeting a requirement of the mass production. The filter unit 70 used for filtering infrared invisible light and allowing visible light forms an ultra-wide-angle micro-optical image capturing device capable of capturing the sight that people see.

By the concatenation between the above-mentioned surfaces of lenses and the adapted curvature radius, thickness, interval, refractivity, and Abbe numbers, the assembly attains a big diaphragm with wide-angle, a shorter height, and a better optical aberration.

Due to the above-mentioned technique of the present invention, it is able to be practiced in accordance with the following values:

| Basic lens data of the preferred embodiment | | Curvature radius (Radius) | Thickness/In terval (Thickness) | Refractivity (Nd) | Abbe number (Vd) |
|---|---|---|---|---|---|
| Surfaces | | | | | |
| First lens **10** | First surface **11** | -6.79 | 2.33 | 1.63192 | 23.415236 |
| | Second surface **12** | -5.75 | 0.64 | | |
| Second lens **20** | Third surface **21** | -3.59 | 0.63 | 1.535081 | 55.779665 |
| | Fourth surface **22** | -2.63 | 0.63 | | |
| Fixing diaphragm **30** | | ∞ | -0.01 | | |
| Third lens **40** | Fifth surface **41** | 6.11 | 1.67 | 1.535081 | 55.779665 |
| | Sixth surface **42** | -0.99 | 0.12 | | |
| Fourth lens **50** | Seventh surface **51** | -0.59 | 0.48 | 1.63192 | 23.415236 |
| | Eighth surface **52** | -1.22 | 0.09 | | |
| Fifth lens **60** | Ninthsurface **61** | 1.50 | 1.06 | 1.535081 | 55.779665 |

(continued)

| Basic lens data of the preferred embodiment | | | | | |
|---|---|---|---|---|---|
| Surfaces | | Curvature radius (Radius) | Thickness/In terval (Thickness) | Refractivity (Nd) | Abbe number (Vd) |
| | Tenth surface 62 | 1.57 | 0.34 | | |
| Filter unit 70 | Eleventh surface 71 | ∞ | 0.21 | 1.516800 | 64.167336 |
| | Twelfth surface 72 | ∞ | 0.31 | | |
| Flat protecti on lens 81 | Thirteenth surface 810 | ∞ | 0.40 | 1.516800 | 64.167336 |
| | Fourteenth surface 811 | ∞ | 0.04 | | |

The filter unit 70 has a thickness of 0.21mm and is adopted by an infrared stopping filter unit, a wave length of the light passing therethrough is 450~650mm. A thickness of the flat protection lens 51 is 0.4mm.

The values of quadratic surface coefficient of the aspheric surface of the preferred embodiment are listed as follows:

The first surface 11 (k=-22.17):

A: 0.00010
B: -5.731771e-5
C: 1.740596e-6
D: 2.047292e-7
E: -1.277025e-8
F: 0
G: 0

The second surface 12(k= -28.24) :

A: -0.000893
B: 2.449012e-5
C: -1.013000e-5
D: 1.410052e-6
E: -9.547812e-8
F: 0
G: 0

The third surface 21(k=2.23) :

A: 0.052556
B: -0.008714
C: -7.423532e-5
D: 0.000311
E: -5.068012e-6
F: 0
G: 0

The fourth surface 22 (k=0.29) :

A: 0.087468
B: -0.038084
C: 0.010244

D: -0.001138
E: -7.705999e-7
F: 0
G: 0

The fifth surface 41(k= 12.19) :

A: -0.020250
B: 0.232169
C: -1.519633
D: 3.731191
E: -3.531465
F: 0
G: 0

The sixth surface 42(k= -0.88) :

A: -0.257221
B: 0.634723
C: -0.867607
D: 0.657436
E: -0.205602
F: 0
G: 0

The seventh surface 51(k= -0.79) :

A: 0.501202
B: -0.033791
C: -0.134659
D: 0.224328
E: -0.077548
F: 0
G: 0

The eighth surface 52(k= -0.17) :

A: 0.256007
B: -0.148905
C: 0.239886
D: -0.157840
E: 0.045949
F: 0
G: 0

The ninth surface 61(k= -2.72) :

A: -0.152828
B: 0.050599
C: -0.002665
D: -0.002845
E: 0.000328
F: 0
G: 0

The tenth surface 62(k= -0.76) :

A: -0.135195

B: 0.027365
C: -0.003286
D: 2.237632e-5
E: -2.549725e-6
F: 0
G: 0

According to the above-mentioned values, the related exponent of performance of the micro-image capturing lens is: FOV=85□; TL=10.0mm; Dg=4.53mm; TL/Dg=2.21.

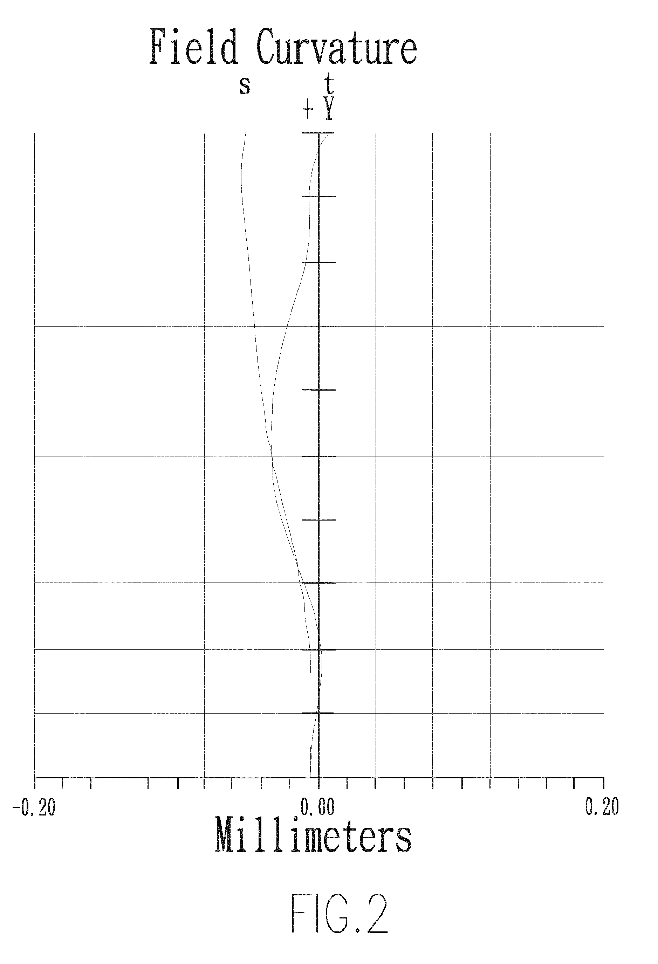

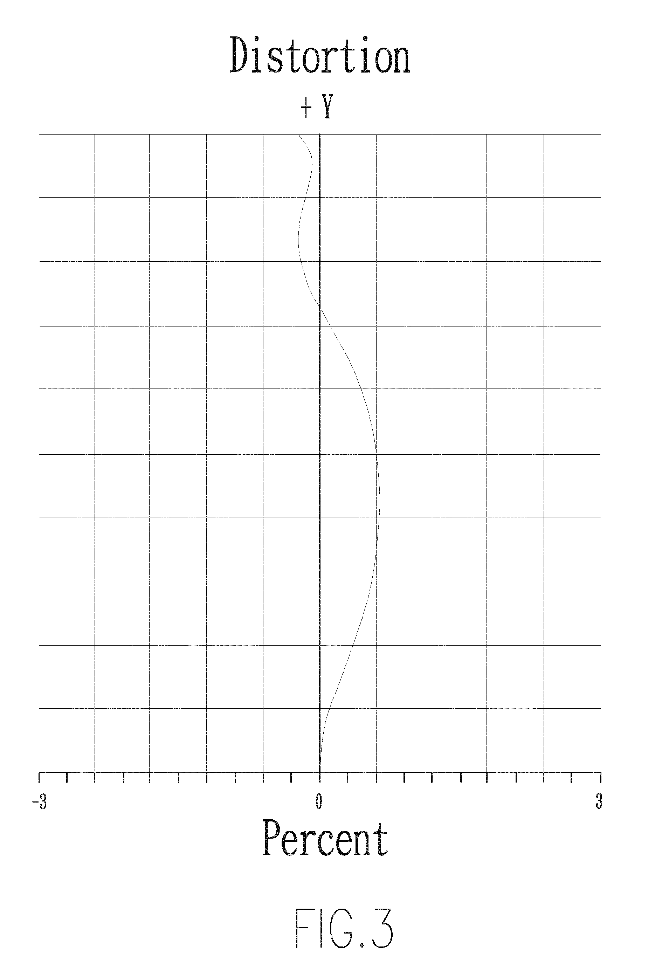

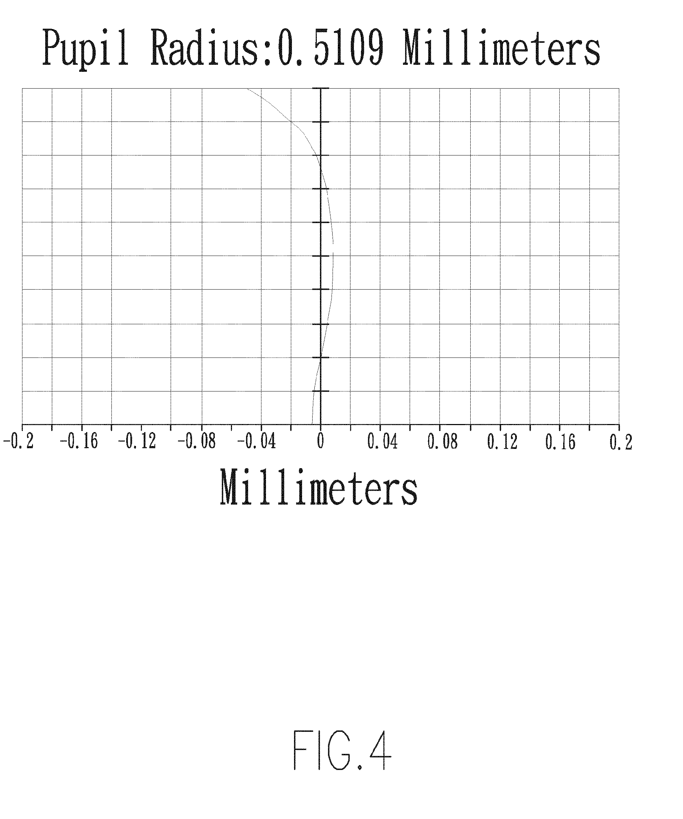

Referring to Fig. **2,** a schematic view of an astigmatic aberration of the preferred embodiment of the present invention is shown. Referring to Fig. **3,** a schematic view of a distorted aberration of the preferred embodiment of the present invention is shown. Referring to Fig. **4,** a schematic view of a spherical aberration of the preferred embodiment of the present invention is shown. The measured astigmatic aberration, distorted aberration, and spherical aberration are in the standard scope and have a good optical performance and imaging quality according to the above-mentioned figures.

The micro-optical image capturing device utilizes five aspheric lenses, the front fourth lens of which have refractive power defined near the optical axis sequentially arranged as positive, positive, positive, and negative, and the filter unit **70** which filters a light of infrared wave length and allows the visible light of the required wave length. The filter unit **70** is preferably adopted by an infrared stopping filter unit for being used for the visible light image.

By making use of the aspheric surface that corrects the aberration and reduces the tolerance sensitivity, not only the aberration is corrected but also the full length of the lens optical system is reduced. Further, the device has an ultra-wide-angle with an image capturing angle over 80°. The first, second, third, fourth, and fifth lenses are preferably adopted by plastic, which is conducive to eliminate the aberration and reduce the weight of the lens. The optical system consists of five plastic lenses and provides with low tolerance sensitivity. The optical system is also easy to be manufactured and assembled andbenef its a mass production. Furthermore, the optical system provides with a good imaging quality to meet the requirement of miniaturizing the portable image capturing products.

While we have shown and described the embodiment in accordance with the present invention, it should be clear to those skilled in the art that further embodiments may be made without departing from the scope of the present invention.

## Claims

1.  An imaging lens assembly comprising a fixing diaphragm (30) and an optical set; said optical set including a first lens (10), a second lens (20), a third lens (40), a fourth lens (50), and a fifth lens (60), an arranging order thereof from an object side to an image side being:

    said first lens (10) having a positive refractive power defined near an optical axis and a concave surface directed toward said object side; at least one surface of said first lens (10) being aspheric;
    said second lens (20) having a positive refractive power defined near the optical axis and a concave surface directed toward said object side; at least one surface of said second lens (20) being aspheric;
    said third lens (40) having a lens with a positive refractive power defined near the optical axis and a convex surface directed toward said image side; at least one surface of said third lens (40) being aspheric;
    said fourth lens (50) having a negative refractive power defined near the optical axis, a concave surface directed toward said object side, and a convex surface directed toward said image side; at least one surface of said fourth lens (50) being aspheric;
    said fifth lens (60) having a convex surface with a corrugated contour directed toward said object side and disposed near said optical axis, and a concave surface with a corrugated contour directed toward said image side and disposed near said optical axis; at least one surface of said fifth lens (60) being aspheric; and
    said fixing diaphragm (30) being disposed between an object and said third lens (40).

2.  The imaging lens assembly as claimed in claim 1 further satisfying the following conditional expression: FOV>80□, wherein said FOV is defined as a maximum using visual angle of said lens assembly.

3.  The imaging lens assembly as claimed in claim 1 further satisfying the following conditional expression: TL/Dg>1, wherein said TL is defined as a distance from an intersection point of said object side of said first lens (10) and said optical axis to an imaging surface side, and said Dg is defined as a length diagonal of a maximum using visual angle of said lens assembly imaged on said imaging surface.

FIG.1

FIG.2

# Distortion

+ Y

-3                    0                    3

# Percent

FIG.3

Pupil Radius:0.5109 Millimeters

-0.2  -0.16  -0.12  -0.08  -0.04  0  0.04  0.08  0.12  0.16  0.2

Millimeters

FIG.4